# EUROPÄISCHE PATENTSCHRIFT

(11) **EP 3 080 671 B1**
(45) Veröffentlichungstag und Bekanntmachung des Hinweises auf die Patenterteilung: **15.04.2020**
(21) Anmeldenummer: 14841418.8
(22) Anmeldetag: 10.12.2014
(51) Int. Cl.: G05D 1/02, B66F 9/065

(54) **FAHRERLOSES TRANSPORTFAHRZEUG FÜR DEN SICHEREN TRANSPORT SCHWERER LASTEN**
DRIVERLESS TRANSPORT VEHICLE FOR THE SAFE TRANSPORTATION OF HEAVY LOADS
VÉHICULE DE TRANSPORT SANS CONDUCTEUR POUR UN TRANSPORT SÛR DES CHARGES LOURDES

(30) Priorität: 12.12.2013 DE 102013020833
(43) Veröffentlichungstag der Anmeldung: 19.10.2016
(73) Patentinhaber: Grenzebach Maschinenbau GmbH, 86663 Asbach-Baeumenheim (DE)
(72) Erfinder: SCHERLE, Mathias, 86663 Asbach-Bäumenheim (DE); MECKLINGER, Sigfried, 86675 Buchdorf (DE)
(74) Vertreter: Kindermann, Peter
(86) Internationale Anmeldenummer: PCT/DE2014/000630
(87) Internationale Veröffentlichungsnummer: WO 2015/085988

(56) Entgegenhaltungen:
- EP-A1- 2 302 416
- WO-A2-2006/044108
- DE-A1- 4 433 786
- DE-A1- 10 146 465
- DE-A1- 10 238 759
- DE-A1-102005 049 159
- DE-U1-202013 007 279
- US-A1- 2008 166 217

## Beschreibung

Die Erfindung betrifft ein fahrerloses Transportfahrzeug für den sicheren Transport schwerer Lasten.
In Produktions - und Distributionsbetrieben gibt es seit vielen Jahren die Forderung nach kurzen Durchlaufzeiten, geringen Beständen und hoher Flexibilität. Zur Erreichung dieser Ziele sind vielfältige organisatorische Maßnahmen und der Einsatz technischer Mittel erforderlich. Im Bereich der technisch operativen Logistik sind es die Prozesse und Betriebsmittel des innerbetrieblichen Materialflusses die geeignet gestaltet werden müssen. Ein wichtiger Prozess im Materialfluss ist das Transportieren, also die zielgerichtete Ortsveränderung von Gütern. Ein Betriebsmittel, das hierzu wegen seiner universellen Verwendungsmöglichkeiten in vielen Unternehmen eingesetzt wird, ist der konventionelle Gabelstapler oder der Gabelhubwagen.
Den Transportprozess zu automatisieren ist durch die Einrichtung von fahrerlosen Transportsystemen gegeben.
Fahrerlose Transportsysteme sind innerbetriebliche Transportsysteme mit automatisch gesteuerten Fahrzeugen die dem Materialtransport dienen.

Zum Stand der Technik ist aus der DE 699 01 363 T2 ein Steuerungssystem für ein automatisch geführtes Fahrzeug (AGV) bekannt, dem die Zielsetzung zugrunde liegt ein gegenüber dem Stand der Technik verbessertes Führungssystem für automatisch geführte Fahrzeuge bereit zu stellen. Ferner soll ein AGV - Führungssystem bereitgestellt werden, das einen ersten Führungsmechanismus zum Führen des AGV entlang Hochgeschwindigkeitsteilen des Weges und einen zweiten Führungsmechanismus zum Führen des AGV entlang Niedergeschwindigkeitsteilen des Weges verwendet.
In dieser Druckschrift wird ein Führungssystem zum Führen eines AGV beansprucht mit den folgenden Merkmalen:
Einer Vielzahl von nicht benachbarten Schienensegmenten; einem Lenkmechanismus zum Führen des AGV entlang der Schienensegmente; und einer elektronischen Steuereinheit zum Führen des AGV zwischen den Schienensegmenten, wobei die elektronische Steuereinheit das AGV von einem Schienensegment zu einem der anderen Schienensegmente lenkt.

Ferner ist aus der DE 10 2011 110 196 A1 ein Mobilteil bekannt, dem die Zielsetzung zugrunde liegt ein Mobilteil weiterzubilden, wobei ein einfaches Handling erreichbar sein soll, insbesondere eine Wartung des Antriebs oder der Elektronik einfach ausführbar sein soll.

Zu diesem Zweck soll ein Mobilteil unter Schutz gestellt werden, das eine Elektronikeinheit und eine Aufnahmeeinheit, insbesondere Aufnahmeplatte, aufweist, wobei die Elektronikeinheit einen elektrischen Antrieb, insbesondere umfassend einen Elektromotor, und von dem elektrischen Antrieb antreibbare Antriebsrollen zum Bewegen des Mobilteils entlang einer Verfahrfläche, insbesondere also Verfahrebenenabschnitt, aufweist.

Dieses Mobilteil ist dadurch gekennzeichnet, dass die Aufnahmeeinheit mittels Rollen, insbesondere Lenkrollen, abgestützt und/oder bewegbar ist zum Bewegen des Aufnahmeteils entlang der Verfahrfläche, insbesondere also Boden, insbesondere in verschiedene Richtungen, wobei die Elektronikeinheit drehbar gelagert ist an der Aufnahmeeinheit, insbesondere wobei die Drehachse senkrecht zur Verfahrfläche gelagert ist.

Die WO 2006/044108 A2 zeigt ein Transportsystem für den Transport von Lasten bestehend aus einem fahrerlosen Transportfahrzeug in Verbindung mit einer auf Lenkrollen bewegbaren Lafette, wobei ein Fahrzeuggehäuse mit einem mittleren Hubdorn, einem linken Hubdorn und einem rechten Hubdorn zum Aufnehmen und Transportieren von Last auf einer mit vier Lenkrollen versehenen Lafette mittels einer, in der Lafette integrierten AndockTraverse vorgesehen ist. Gezeigt werden auch zwei, beidseitig in der Mitte des Fahrzeuggehäuses an jeweils einer gesondert gelagerten Drehachse separat von jeweils einem Antrieb angetriebene Antriebsräder, und Stützräder, die jeweils paarweise an der Vorderseite und an der Hinterseite des Fahrzeuggehäuses angeordnet sind.

Es ist die Aufgabe der vorliegenden Erfindung ein autonomes Transportfahrzeug zu schaffen mit dem der schnelle und vor allem sichere Transport von Lastregalen mit Lasten bis über 1000 kg in großen Werkhallen störungsfrei auch bei leichten Steigungen ausgeführt werden kann

Diese Aufgabe wird durch die Vorrichtung nach Anspruch 1 und das Verfahren nach Anspruch 6 gelöst.

Die erfindungsgemäße Vorrichtung wird im Folgenden näher beschrieben.

Es zeigen im Einzelnen:
Fig. 1: eine perspektivische Ansicht auf ein Transportfahrzeug 4,
Fig. 2: eine Draufsicht auf ein Transportfahrzeug 4 und eine Lafette,
Fig. 3: einen Querschnitt eines Transportfahrzeugs am Boden,
Fig.4: eine Draufsicht auf die Bremseinrichtung der Lafette
Fig. 5: einen Querschnitt durch die Bremseinrichtung
Fig. 6: eine Funktionsdarstellung der Schalthebel 14
Fig.7: einen Querschnitt durch eine Lenkrolle 3

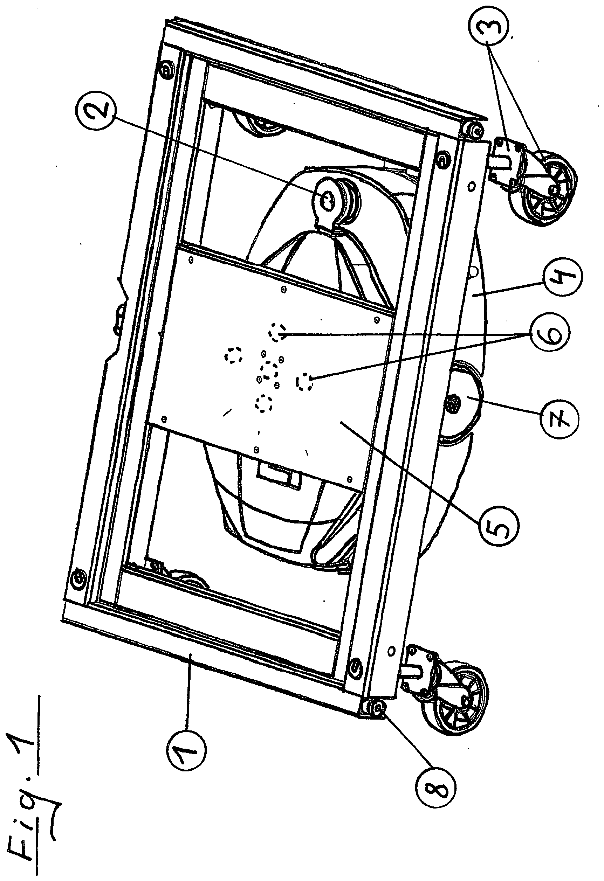

Die Fig.1 zeigt eine perspektivische Ansicht auf ein Transportfahrzeug 4 mit einer aufliegenden Lafette 1. Die Lafette 1 ist im Bereich ihres Schwerpunkts mit einer rechteckigen Andock - Traverse 5 verbunden, die im Schnittpunkt ihrer Flächendiagonalen eine Bohrung aufweist die in Richtung der Längsseite dieses

Rechtecks und in Richtung der Querseite jeweils zu beiden Seiten von einer weiteren Bohrung begleitet ist. Diese 5 Bohrungen bilden ein Kreuz, das als Andock - Kreuz 6 bezeichnet wird, da das Transportfahrzeug 1 Mittel aufweist mit denen über, in diese Bohrungen gleitende, Zapfen in der Form von drei Hubdornen eine kraftschlüssige Verbindung zur Lafette 1 als Andockung hergestellt wird. Die Mittelpunkte dieser drei Hubdorne, eines linken, eines mittleren und eines rechten, liegen auf einer Linie wobei der mittlere Hubdorn die Bohrung im Schnittpunkt der Flächendiagonalen der Andock - Traverse 5 durchdringt. Da die 5 beschriebenen Bohrungen den drei Hubdornen eine Andockung in zwei, aufeinander senkrecht stehenden, Richtungen erlauben, ist das Transportfahrzeug 4 in der Lage eine Lafette 1 in Längsrichtung oder in Querrichtung aufzunehmen. An der oberen Vorderseite des gezeigten Transportfahrzeugs 4 ist ein, der Orientierung dienender, Laser - Scanner mit 2 bezeichnet. Das, hier sichtbare, rechte Antriebsrad des Transportfahrzeugs 4 trägt die Bezeichnung 7 und die Lenkrollen der Lafette 1 sind mit 3 bezeichnet. Ein, an allen vier Ecken einer Lafette 1 installierter Notausschalter ist mit 8 gekennzeichnet.

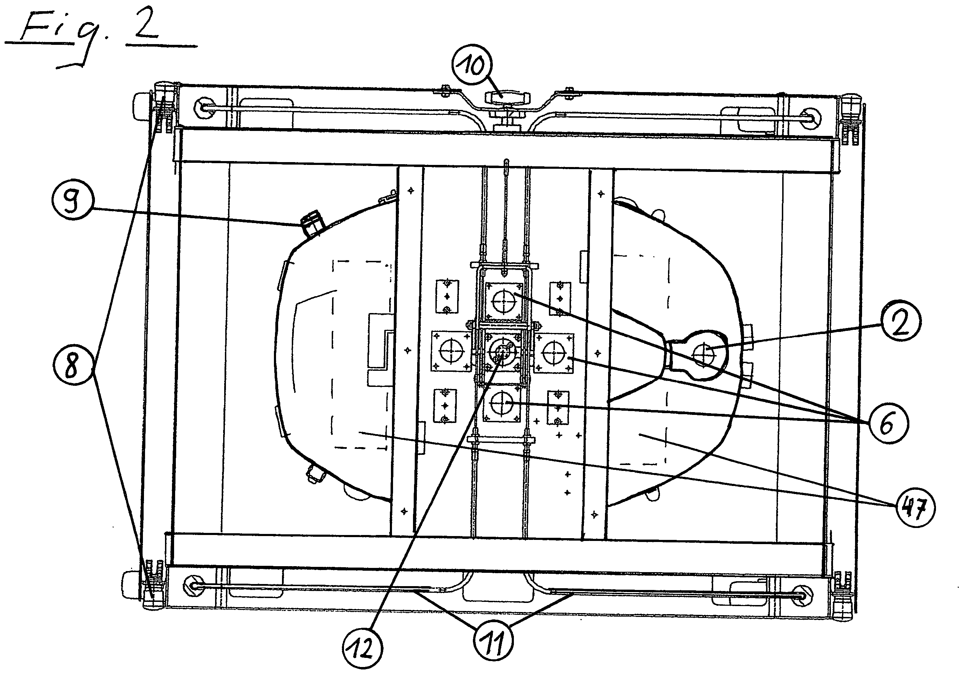

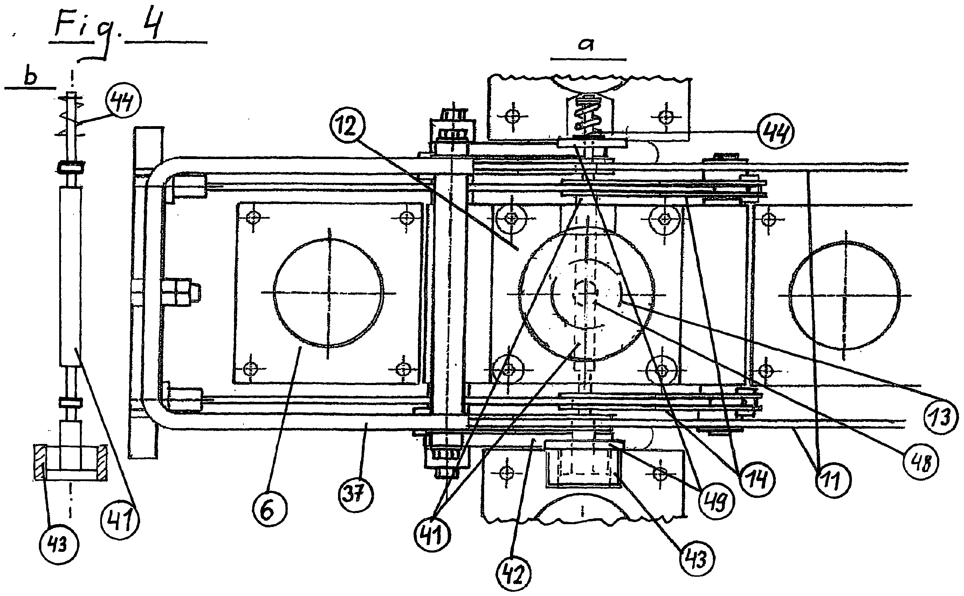

Die Fig.2 zeigt eine Draufsicht auf ein Transportfahrzeug 4 und eine Lafette mit vier Notausschaltern für jede der vier Lenkrollen, wobei auf der linken Seite zwei Notausschalter mit 8 bezeichnet sind.
Die hier gezeigte Zeichnung lässt, den zur Auslösung eines Bremsvorgangs wichtigen, im Zentrum auf einer Lafette im Bereich des Andock - Kreuzes 6 sichtbaren, Andockkopf 12 für den mittleren Hubdorn erkennen. Die Fig.2 dient weiter der Darstellung des Verlaufs von Bremszügen 11 in der Lafette die, ausgehend vom Andockkopf 12, jeweils zu einer Lenkrolle 3 führen Ein weitere Notausschalter 9, der über entsprechende Kontakte mit dem Bremssystem verbunden ist, befindet sich am Transportfahrzeug, an dem auch der Laser - Scanner 2 bezeichnet ist. Um nach dem Auslösen eines Bremsvorgangs die an jeder Laufrolle ausgelöste Bremse zurückzusetzen, dient unter anderem ein manuell betätigbares Handrad 10. Zur weiteren Erklärung der Funktion der Bremsen an der Lafette wird auf die Beschreibung der Fig.4 verwiesen. Der Vollständigkeit halber sind weiter die Plätze 47 zur Aufnahme von Energiespeichern, zum Beispiel in der Form elektrischer Akkumulatoren, aufgezeigt.

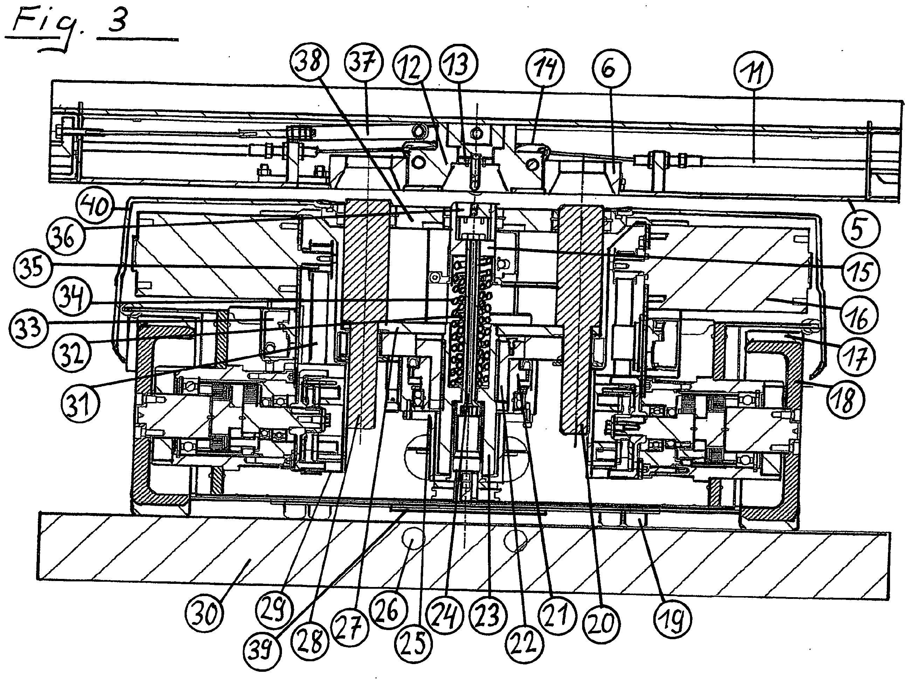

Die Fig.3 zeigt einen Querschnitt eines Transportfahrzeugs am Boden, wobei eine Lafette in diesem Beispiel in der richtigen Lage darüber ohne mechanische Verbindung zu sehen ist. Dies verdeutlicht die Zuordnung der Verbindungselemente zwischen dem Transportfahrzeug und der betreffenden Lafette.

In der Mitte ist hier der mittlere Hubdorn 15 mit einer äußeren Druckfeder 34, einer inneren Druckfeder 32 und einem konzentrisch zur Längsachse dieser beiden Federn verlaufenden Führungsrohr 24 zu sehen. Ein Zahnrad 21 treibt eine Spindelmutter 22 zu einer Drehung an. Durch Drehung der Spindelmutter 22 erfolgt eine Vertikalbewegung einer Hubspindel 23 mit einer Druckplatte 27. Eine Aufwärtsbewegung des Hubdorns 15 erfolgt über die Hubspindel 23 mit der Druckfeder 34 die auf den Hubdorn 15 drückt und in ihrer Länge durch das Führungsrohr 24 begrenzt wird.

Durch entgegen gesetztes Drehen der Spindelmutter 22 erfolgt die Abwärtsbewegung der Hubspindel 23 mit der Druckplatte 27 und den äußeren Hubdornen 28 und 20. Durch weiteres Absenken der Hubspindel 23 stößt die untere Begrenzung des Führungsrohrs 24 an eine, im Innern der Hubspindel 23 vorgesehene, ringförmige Arretierung. Dadurch wird die Druckfeder 34 begrenzt und der Hubdorn 15 erfährt durch weiteres Absenken der Hubspindel 23 eine Abwärtsbewegung. Somit löst sich der Hubdorn 15 als letzter der Hubdorne von der Andock - Traverse 5. Dies bedeutet eine zusätzliche Sicherheit bei einem Nothalt.

Der Kontakt zwischen dem Transportfahrzeug und der Andock - Traverse 5 der Lafette wird mittels des vertikalen Hochdrückens des mittleren Hubdorns 15 bewirkt. Konzentrisch um ein, auf der gesamten Länge der Hubspindel 23 eingefrästes, Außengewinde ist die, in dieses Außengewinde eingreifende, Spindelmutter 22 angeordnet. Der Antrieb des Zahnrads 21 erfolgt mittels eines Antriebsmotors, dessen Antriebsritzel über Untersetzungs - Zahnräder mit dem Zahnrad 21 in Eingriff steht. Der Antriebsmotor, das Antriebsritzel und die Untersetzungs - Zahnräder sind in der Fig.3 verdeckt und deshalb nicht zu erkennen.

Durch den Einsatz der beiden Druckfedern 34 und 32 ist es möglich den Druck mit dem der mittlere Hubdorn 15 die Lafette unterstützt variabel zu gestalten. So kann zum Beispiel der Druck der über die äußere Druckfeder 34 auf die Andock - Traverse 5, und damit auf die Lafette, ausgeübt wird von Null bis 400 kp Ladungslast variiert werden. Wird der Druck weiter erhöht, kommt die innere Druckfeder zum Einsatz, die eine Veränderung der Druckkraft von zum Beispiel 400 kp bis 1000 kp Ladungslast zulässt.

Auf diese Weise kann der Anteil der Last auf der zu transportierenden Lafette der auf den Antriebsrädern des Transportfahrzeugs lastet, den jeweiligen Gegebenheiten des Bodens angepasst werden. Denn auf diese Weise können nicht nur die Antriebsleistung des Transportfahrzeugs an die insgesamt zu transportierende Last sondern auch an die Bodenverhältnisse und die Belastbarkeit der Antriebsräder angepasst werden.
Diese Maßnahmen haben einen erheblichen Einfluss auf das Bremsverhalten des beladenen Transportfahrzeugs.

Mit dem beschriebenen System können Steigungen oder Gefälle der Bodenfläche von bis zu 5% überwunden werden.

Die Induktions - Leitung 26, der zugehörige Induktions - Stromabnehmer 39 und die Stützräder 19 sind im Bereich nahe der Fahrbahn 30 angeordnet.
Auf der linken Seite der Fig.3 ist das Fahrzeuggehäuse mit 40 bezeichnet. Ein, ebenso wie auf der rechten Seite, mit 16 bezeichneter Antrieb treibt über ein Antriebsrad 35 und einen Zahnriemen 31 sowie ein Zahnriemenrad 29 ein Antriebsrad mit einer Antriebsrad - Felge 18 und einen Antriebsrad - Reifen 17 an. Letztere sind auf der rechten Seite bezeichnet. Im Bereich des linken Antriebsrads des Transportfahrzeugs ist ein Dreh - Mess - Sensor 33 eines Antriebsrads 7 dargestellt. Mit diesem ist in Verbindung mit einem Laser - Scanner (2) die Berechnung des Schlupfes an jedem Antriebsrad (7) möglich.
Im oberen Bereich des mittleren Hubdorns ist die Führungsplatte 38 für den linken und den rechten Hubdorn zu erkennen.
Im darüber angeordneten Bereich einer Lafette ist der Andockkopf - Lafette 12 für den mittleren Hubdorn mit einer Kontaktplatte 13 aufgezeigt.
Die in der Fig.3 in diesem Bereich weiter gezeigten Bremszüge 11 und Schalthebel 14 für Seilzugbremsen sind zusammen mit der Zugeinrichtung 37 in der Fig.4 näher beschrieben.

Die Fig. 4 zeigt in ihrem Teil a eine Draufsicht auf die Bremseinrichtung der Lafette. Hier ist der Bereich um die Andockkopf - Lafette 12 für den mittleren Hubdorn aus der Fig.2 im rechten Winkel gedreht, und im Detail vergrößert dargestellt. Dieser Andockkopf 12 ist der mittlere Teil des Andock - Kreuzes 6 in dessen Zentrum auch die, aus der Fig.3 bekannte, Kontaktplatte 13 gezeigt ist. Von diesem Andock - Kreuz 6 sind oben und unten von dem gezeigten Zentrum die ergänzenden Platten mit einer Ausriss - Darstellung zu erkennen.
Die Funktion der gezeigten Bremseinrichtung besteht darin, durch einen manuellen Eingriff, zum Beispiel die Betätigung eines Notausschalters, an jeder Lenkrolle der Lafette eine, normalerweise bestehende, Arretierung zu lösen. Diese Arretierung in Form eines Bremszugs, der an einem der Schalthebel 14 angreift, hindert einen durch Federdruck auf die Lenkrolle einwirkenden Bremsschuh am Abbremsen.
Zu diesem Zweck ist eine, quer zur Lage der gezeigten 3 Hubdorne, angeordnete Schalt - und Hebeachse 41 zwischen einer Rückstellfeder 44 im obere Bildbereich und einem elektromagnetischen Stellelement 43 im unteren Bildbereich vorgesehen. Diese Schalt - und Hebeachse 41 sorgt in der Normalstellung dafür, dass vier Schalthebel 14 für Seilzugbremsen, an jeder der vier Lenkrollen an der Lafette, ihrerseits in ihrer Normalstellung den jeweiligen Bremsschuh an seiner Bremswirkung hindern. Dies wird dadurch erreicht, dass jeder der vier Schalthebel 14 einerseits der Zugkraft einer Bremsfeder an jeder Lenkrolle über Bremszüge 11 ausgesetzt ist, andererseits jedoch an seinem schlitzförmigen Eingriffsbereich an der Schalt - und Hebeachse 41 mittels einer Verdickung des Querschnitts dieser Achse gehalten wird.

Wird nunmehr die Schalt - und Hebeachse 41 in ihrer Längsachse so verschoben, dass die vier Schalthebel 14 in einen nicht verdickten Bereich der Schalt - und Hebeachse 41 gelangen, finden sie an dieser Achse keinen Halt mehr und das gestörte Gleichgewicht an den vier Schalthebeln 14 lässt diese sich in ihren Drehachsen drehen und der Zugkraft des jeweiligen Bremszugs 11 folgen. Dies löst schlagartig über die Bremszüge 11 die Arretierung der Bremsschuhe an den vier Lenkrollen aus, da jeder der vier Bremsschuhe von einer dort angebrachten Druckfeder auf die jeweilige Lenkrolle gedrückt wird.
Eine Verschiebung der Schalt - und Hebeachse 41 kann zum Beispiel über die Betätigung eines Notausschalters und die von ihm verursachte Auslösung des elektromagnetischen Stellelements 43 erfolgen, das mit einem kurzen Ruck die Schalt - und Hebelachse 11 verschiebt.
Nach der Freigabe der vier Schalthebel 14 wird die Schalt - und Hebeachse 41 mittels der Rückstellfeder 44 wieder in ihre Ausgangsstellung geschoben.
Zur Verdeutlichung dieses Vorgangs ist im Teil b der Fig.4 die Schalt - und Hebeachse 41 in ihrer Einbaulage extra herausgezeichnet. Im oberen Bereich ist hier nochmals die Rückstellfeder 44 und im unteren Bereich das elektromagnetische Stellelement 43 gezeigt. Der Führung der Schalt - und Hebelachse 41 dient an jedem ihrer beiden Lagepunkte ein äußerer Führungssteg 49 mit jeweils einem Langloch.
Da nach einem Nothalt die Schalt - und Hebeachse 41 wieder in ihre Ausgangsstelle gedrückt werden kann, ist zu diesem Zweck ein Rückstellbolzen 48 vorgesehen.
Zur manuellen Betätigung der Bremseinrichtung dienen eine Zugeinrichtung 37 und ein diesbezüglicher Schalthebel 42.

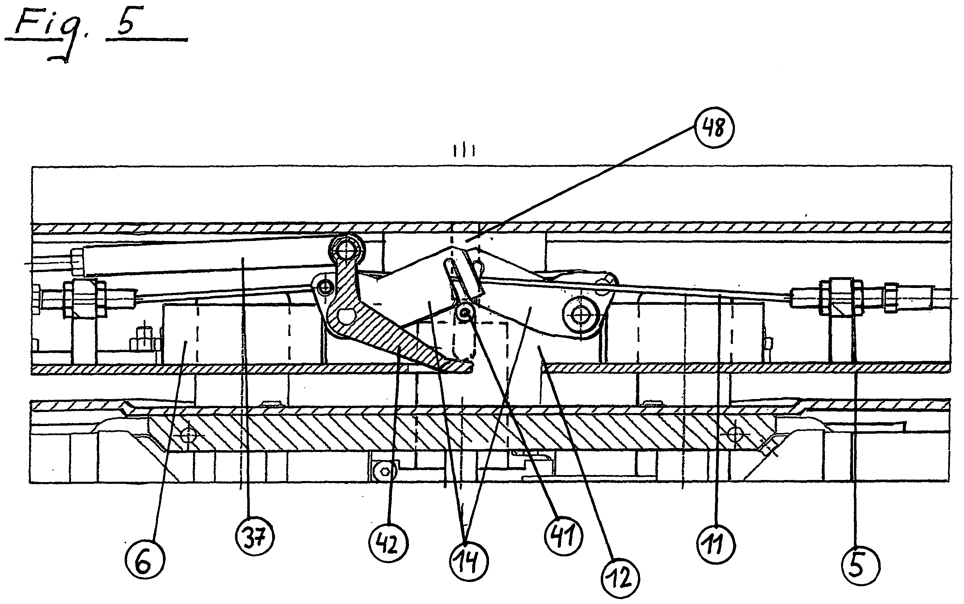

Die Fig.5 zeigt einen Querschnitt durch die Bremseinrichtung in einer Lafette.
Hier sind das Andock - Kreuz 6 und die Traverse 5 zu erkennen und es ist auf der rechten Seite ein Bremszug 11 bezeichnet. Die Schalthebel 14 sind im Bereich der Andockkopf - Lafette 12 in geöffneter Stellung über der Schalt - und Hebeachse 41 gezeigt. Der Rückstellbolzen 48 ist in dieser Ansicht im Längsschnitt zu sehen. Die Zugeinrichtung 37 und der zugehörige Schalthebel 42 sind hier deutlich zu erkennen.

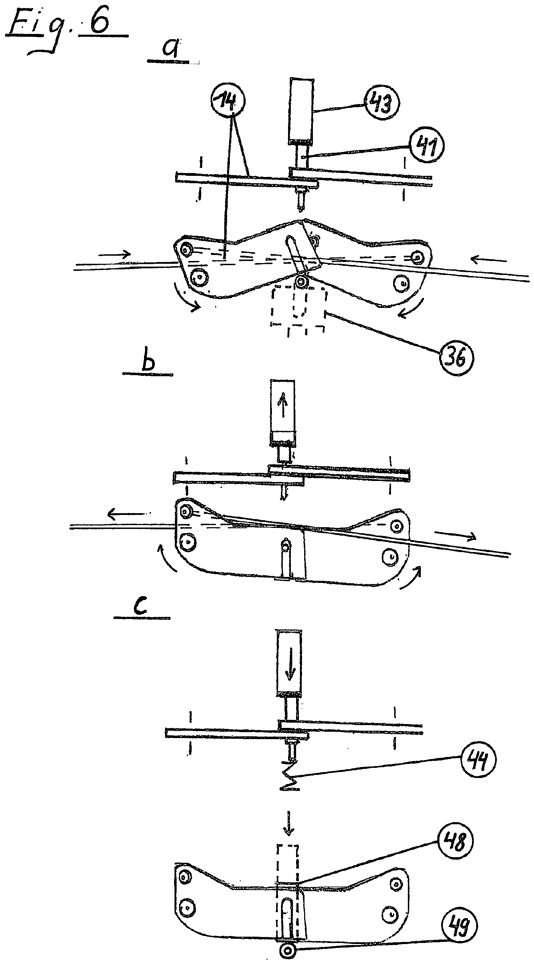

Die Fig.6 zeigt eine Funktionsdarstellung der Schalthebel 14.
Im Teil a der Fig.6 ist die Schalt - und Hebeachse 41 in Verbindung mit dem elektromagnetischen Stellelement 43 und zwei Stellhebeln 14 mit ihren angedeuteten Drehachsen von oben gezeigt, wobei darunter dieselben zwei Schalthebel 14 im Schnitt zu sehen sind. Hier ist zu erkennen, dass die Schalt - und Hebeachse 41 von der Kontaktplatte 36 des Hubdorns, entsprechend der Erfordernis der aufliegenden Last, nach oben gedrückt wird, wobei die Schalthebel 14 sich im Bereich der Verdickung der Schalt - und Hebeachse 41 befinden. Deshalb hat das Langloch in den Schalthebeln 14 keinen Einfluss.
Im Teil b der Fig.6 ist die Sachlage dargestellt, in der das elektromagnetische Stellelement 43 die Schalt - und Hebeachse 41 angezogen hat weil zum Beispiel ein Nothalt ausgelöst wurde. Die Schalthebel befinden sich in dem schmalen Bereich dieser Achse, sodass der Zug der Bremszüge keinen Widerstand mehr findet, weil das Langloch in dem jeweiligen Schalthebel, von einer Bremsfeder an der betreffenden Lenkrolle veranlasst, über die schmale Stelle der Schalt - und Hebeachse 41 rutschen kann. Die Folge davon ist, dass die Druckfeder an dem Bremsschuh der jeweiligen Lenkrolle keinen Widerstand mehr findet und den betreffenden Bremsschuh auf die Lenkrolle drückt.

Im Teil c der Fig.6 ist die Schalt - und Hebeachse 41 von einem Rückstellbolzen 48 wieder nach unten gedrückt und von der Rückstellfeder 44 wieder in die Ausgangslage gezogen, wobei die Schalthebel 14 durch die Kontaktplatte 36 für den Hubdorn ebenfalls in ihre Ausgangsposition gedrückt werden und die Bremsschuhe lösen.

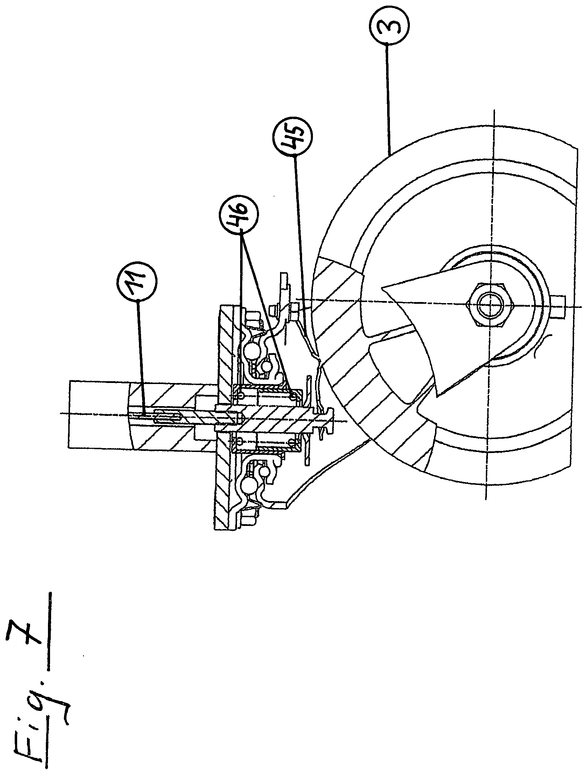

Die Fig.7 zeigt einen Querschnitt durch eine Lenkrolle 3.
Hier ist zu erkennen, wie eine Bremsfeder 46 einen Bremsschuh 45 auf eine Lenkrolle 3 drückt wenn sie nicht durch einen Bremszug 11 daran gehindert wird.

Weiterhin befindet sich in dem Transportfahrzeug ein Steuerungs - und Messgerät 50 das in keiner Fig. dargestellt ist, mit der folgenden Funktion.

Dieses Messgerät ermöglicht bei einer zweckdienlichen, kurzen und zeitlich begrenzten, Beschleunigung aus dem Stand die Messung der Beschleunigung, und lässt so, unter Berücksichtigung bestimmter Parameter, Rückschlüsse auf die beschleunigte Masse zu. Andererseits können in vorangehenden Messreihen auf ebenem Boden die bei bestimmten Beladungen der Lafette gemessenen Anlaufströme ermittelt werden und später allein durch die Messung des Anlaufstroms bei einer unbekannten Last entsprechende Rückschlüsse gezogen werden.

Die Steuerung der komplexen Bewegungsvorgänge und die Signalverarbeitung der verwendeten Sensoren erfordern ein spezielles Steuerungsprogramm.

### Bezugszeichenliste

- 1: Lafette
- 2: Laser - Scanner
- 3: Lenkrolle
- 4: Transportfahrzeug
- 5: Andock - Traverse
- 6: Andock - Kreuz
- 7: Antriebsrad
- 8: Notausschalter Lafette
- 9: Notausschalter am Transportfahrzeug
- 10: Handrad für manuelle Bedienung der Bremse
- 11: Bremszüge (Bremsleitungen)
- 12: Andockkopf - Lafette für den mittleren Hubdorn
- 13: Kontaktplatte der Lafette
- 14: Schalthebel für Seilzugbremsen
- 15: mittlerer Hubdorn
- 16: Antrieb für ein Antriebsrad
- 17: Antriebsrad - Reifen
- 18: Antriebsrad - Felge
- 19: Stützrad
- 20: rechter Hubdorn
- 21: Zahnrad zum Antrieb der Spindelmutter 22
- 22: Spindelmutter
- 23: Hubspindel
- 24: Führungsrohr für die innere 32 und die äußere Druckfeder 34
- 25: Gehäuse für die Hubspindel 28
- 26: Induktions - Leitung
- 27: Druckplatte für den linken und rechten Hubdorn
- 28: linker Hubdorn
- 29: Zahnriemenrad für den Antrieb eines Antriebsrads
- 30: Fahrbahn
- 31: Zahnriemen
- 32: innere Druckfeder
- 33: Dreh - Mess - Sensor eines Antriebsrads 7
- 34: äußere Druckfeder
- 35: Antriebsrad für den Zahnriemen 31
- 36: Kontaktplatte Hubdorn
- 37: Zugeinrichtung für manuelle Bedienung der Bremse
- 38: Führungsplatte für den linken und rechten Hubdorn
- 39: Induktions - Stromabnehmer
- 40: Fahrzeuggehäuse
- 41: Schalt - und Hebeachse für die Bremseinrichtung
- 42: Schalthebel für eine manuelle Bremse
- 43: elektromagnetisches Stellelement
- 44: Rückstellfeder für die Schalt -und Hebeachse 41
- 45: Bremsschuh
- 46: Bremsfeder
- 47: Plätze für Energiespeicher (elektrische Akkumulatoren)
- 48: Rückstellbolzen für die Schaltachse 41 nach Nothalt
- 49: Äußere Führungsstege für Schaltachse 41 mit Langloch
- 50: Steuerungs - und Messgerät

## Patentansprüche

1. Transportsystem für den Transport von Lasten bestehend aus einem fahrerlosen Transportfahrzeug in Verbindung mit einer auf Lenkrollen bewegbaren Lafette, mit den folgenden Merkmalen:
einem Fahrzeuggehäuse (40) mit einem mittleren Hubdorn (15), einem linken Hubdorn (28) und einem rechten Hubdorn (20) zum Aufnehmen und Transportieren von Last auf einer mit vier Lenkrollen (3) versehenen Lafette (1) mittels einer, in der Lafette (1) integrierten Andock-Traverse (5),
mit zwei, beidseitig in der Mitte des Fahrzeuggehäuses (40) an jeweils einer gesondert gelagerten Drehachse separat von jeweils einem Antrieb (16) angetriebenen Antriebsrädern (7), und
Stützrädern (19), die jeweils paarweise an der Vorderseite und an der Hinterseite des Fahrzeuggehäuses (40) vorgesehen sind,
wobei an jedem Antriebsrad (7) ein Dreh-Mess-Sensor (33) vorgesehen ist,
und wobei mindestens ein Laser-Scanner (2) im Außenbereich des Fahrzeuggehäuses (40) installiert ist,
wobei ein System zur Energieversorgung des Transportfahrzeugs (4) über induktive, im Boden verlegte Leitungen mittels eines Induktions-Stromabnehmers (39) vorgesehen ist, und ein Nothaltsystem vorgesehen ist, das Notausschalter (9) am Transportfahrzeug (4) und Notausschalter (8) an der Lafette (1) aufweist, wobei bei Betätigung eines der Notausschalter (8, 9) an jeder Lenkrolle (3) der Lafette (1) gleichzeitig die Arretierung eines druckbelasteten Bremsschuhs (45) gelöst wird,
**dadurch gekennzeichnet, dass**
eine Druckfeder (34) an einem Ende mit dem mittleren Hubdorn (15) und am anderen Ende mit einer Hubspindel (23) verbunden ist, und
die Hubspindel (23) eine Druckplatte (27) aufweist, die in Kontakt mit dem linken (28) und rechten (20) Hubdorn ist,
und
ein Antriebsmotor die Hubspindel (23) antreibt, die mittels der Druckfeder (34) den mittleren Hubdorn (15) in eine zentrale Öffnung der Andock-Traverse (5) drückt und mittels der Druckplatte (27) den linken Hubdorn (28) und den rechten Hubdorn (20) in entsprechende weitere Öffnungen der Andock-Traverse (5) drückt.

2. Transportsystem nach Anspruch 1,
**dadurch gekennzeichnet,**
**dass** die Andock-Traverse (5) der Lafette (1) ein Andock-Kreuz (6) aufweist, das ein Aufnehmen der Lafette (1) in einer, im rechten Winkel gedrehten, Position des Transportfahrzeugs (4) ermöglicht.

3. Transportsystem nach Anspruch 1 oder 2,
**dadurch gekennzeichnet,**
**dass** im Fahrzeuggehäuse (40) die Druckfeder (34) eine weitere, innere Druckfeder (32) konzentrisch umschließt, die einen höheren Anpressdruck auf die Lafette (1) ermöglicht.

4. Transportsystem nach einem der Ansprüche 1 bis 3,
**dadurch gekennzeichnet,**
**dass** eine Abbremsung des Transportfahrzeugs (4) auch mittels einer handbetätigten Bremse (37, 42) möglich ist.

5. Transportsystem nach einem der Ansprüche 1 bis 4,
**dadurch gekennzeichnet,**
**dass** mittels des Laser-Scanners (2) im Transportfahrzeug (4) in Verbindung mit einem Dreh-Mess-Sensor (33) an jedem Antriebsrad (7) die Berechnung des Schlupfes an jedem Antriebsrad (7) ermöglicht wird.

6. Verfahren zum Betrieb eines Transportsystems für den Transport von Lasten bestehend aus einem fahrerlosen Transportfahrzeug in Verbindung mit einer auf Lenkrollen bewegbaren, Lafette, mit den folgenden Verfahrensschritten:
a) die Verwendung eines Fahrzeuggehäuses (40) mit einem mittleren Hubdorn (15), einem linken Hubdorn (28) und einem rechten Hubdorn (20) zum Aufnehmen und Transportieren einer Lafette (1) mittels einer, in der Lafette (1) integrierten Andock-Traverse (5), mit zwei, beidseitig in der Mitte des Fahrzeuggehäuses (38) an jeweils einer gesondert gelagerten Drehachse separat von jeweils einem Antrieb (16) angetriebenen Antriebsrädern (7), wobei
eine Druckfeder (34) an einem Ende mit dem mittleren Hubdorn (15) und am anderen Ende mit einer Hubspindel (23) verbunden ist, und
die Hubspindel (23) eine Druckplatte (27) aufweist, die in Kontakt mit dem linken (28) und rechten (20) Hubdorn ist,
b) das Darunterfahren des Fahrzeuggehäuses (40) unter die Lafette (1), das Ermitteln von Öffnungen im Bereich der Andock-Traverse (5), das Antreiben der Hubspindel (23) durch einen Antriebsmotor, wobei mittels der Druckfeder (34) der mittlere Hubdorn (15) in eine zentrale Öffnung der Andock-Traverse (5) und mittels der Druckplatte (27) der linke Hubdorn (28) und der rechte Hubdorn (20) in entsprechende weitere Öffnungen der Andock-Traverse (5) gedrückt werden, wobei mindestens ein Laser-Scanner (2) der Orientierung dient,
c) das potentielle Auslösen eines Nothalts mittels eines der Notausschalter (8, 9) entweder gewollt oder zur Erprobung mittels einer Bremsfeder (46) und eines Bremsschuhs (45) an jeder Lenkrolle (3) der Lafette (1) und das Lösen der Bremsen an jeder der vier Lenkrollen (3) der Lafette (1) vor der Weiterfahrt, und
d) der weitere Transport der Lafette (1) zum Zielort, und der Lösung der mechanischen Verbindung des Fahrzeuggehäuses (38) von der Lafette (1).

7. Verfahren nach Anspruch 6, **dadurch gekennzeichnet,**
**dass** der Anpressdruck der Hubdorne (28, 15, 20) sich nach der Beladung der Lafette (1) richtet.

8. Verfahren nach Anspruch 6 oder 7,
**dadurch gekennzeichnet,**
**dass** die Andock-Traverse (5) ein Andock-Kreuz (6) aufweist, das eine Ausrichtung einer Lafette (1) in zwei, in einem rechten Winkel zueinander verlaufenden, Richtungen erlaubt.

9. Verfahren nach einem der Ansprüche 6 bis 8,
**dadurch gekennzeichnet,**
**dass** mittels der Messung der Beschleunigung und/oder des Anfahrstroms des beladenen Transportfahrzeugs (4) das Gewicht der Beladung ermittelt wird.

10. Verfahren nach einem der Ansprüche 6 bis 9,
**dadurch gekennzeichnet,**
**dass** mittels eines Laser-Scanners (2) in Verbindung mit einem Dreh-Mess-Sensor (33) an jedem Antriebsrad (7) die Berechnung des Schlupfes an jedem Antriebsrad (7) ermöglicht wird.

11. Computerprogramm mit einem Programmcode zur Durchführung der Verfahrensschritte nach einem der Ansprüche 6 bis 10, wenn das Programm in einem Computer ausgeführt wird.

12. Maschinenlesbarer Träger mit dem Programmcode eines Computerprogramms zur Durchführung des Verfahrens nach einem der Ansprüche 6 bis 10, wenn das Programm in einem Computer ausgeführt wird.

## Claims

1. Transport system for the transportation of loads, consisting of a driverless transport vehicle in conjunction with a carriage which is movable on casters, the transport system having the following features:
a vehicle housing (40) having a central lifting pin (15), a left lifting pin (28), and a right lifting pin (20) for receiving and transporting load on a carriage (1) provided with four casters (3) by means of a docking cross beam (5) which is integrated in the carriage (1),
having two drive wheels (7) which, each on a dedicated mounted rotation axle, are separately driven on either side of the center of the vehicle housing (40) by one drive (16) each, and
support wheels (19) which are provided in each case in pairs on the front side and on the rear side of the vehicle housing (40),
wherein a rotary encoder (33) is provided on each drive wheel (7),
and wherein at least one laser scanner (2) is installed in the external region of the vehicle housing (40),
wherein a system for supplying energy to the transport vehicle (4) by means of an induction current pick-up (39) by way of inductive lines which are installed in the floor is provided, and an emergency-stop system is provided which has emergency off-switches (9) on the transport vehicle (4), and emergency off-switches (8) on the carriage (1), the locking of a pressure-loaded brake shoe (45) on each caster (3) of the carriage (1) being simultaneously released upon actuation of one of the emergency off-switches (8, 9),
**characterized in that**
a pressure spring (34) is connected to the central lifting pin (15) at one end and to a lifting spindel (23) at the other end, and the lifting spindle (23) has a pressure plate (27) which is in contact with the left (28) and right (20) lifting pin and
a drive motor drives the lifting spindle (23) which by means of the pressure spring (34) presses the central lifting pin (15) into a central opening of the docking cross beam (5), and by means of the pressure plate (27) presses the left lifting pin (28) and the right lifting pin (20) into corresponding further openings of the docking cross beam (5).

2. Transport system according to Claim 1, **characterized in that** the docking cross beam (5) of the carriage (1) has a docking cross brace (6) which enables receiving of the carriage (1) in a position of the transport vehicle (4) that is rotated about a right angle.

3. Transport system according to Claim 1 or 2, **characterized in that** in the vehicle housing (40) the pressure spring (34) concentrically encloses a further internal pressure spring (32) which enables higher contact pressure on the carriage (1).

4. Transport system according to one of Claims 1 to 3, **characterized in that** deceleration of the transport vehicle (4) is also possible by means of a manually actuated brake (37, 42).

5. Transport system according to one of Claims 1 to 4, **characterized in that** the calculation of the slippage on each drive wheel (7) is enabled by means of the laser scanner (2) in the transport vehicle (4) in conjunction with a rotary encoder (33) on each drive wheel (7).

6. Method for operating a transport system for the transportation of loads, consisting of a driverless transport vehicle in conjunction with a carriage which is movable on casters, the method having the following method steps:
a) using a vehicle housing (40) having a central lifting pin (15), a left lifting pin (28), and a right lifting pin (20) for receiving and transporting a carriage (1) by means of a docking cross beam (5) which is integrated in the carriage (1), having two drive wheels (7) which, each on an independently mounted rotation axle, are separately driven on either side of the center of the vehicle housing (38) by one drive (16) each, wherein a pressure spring (34) is connected to the central lifting pin (15) at one end and to a lifting spindle (23) at the other end, and the lifting spindle (23) has a pressure plate (27) which is in contact with the left (28) and right (20) lifting pin,
b) moving the vehicle housing (40) below the carriage (1), determining openings in the region of the docking cross beam (5), driving the lifting spindle (23) by means of a drive motor, wherein by means of the pressure spring (34), the central lifting pin (15) is pressed into a central opening of the docking cross beam (5) and by means of the pressure plate (27), the left lifting pin (28) and the right lifting pin (20) are pressed into corresponding further openings of the docking cross beam (5), at least one laser scanner (2) serving for orientation,
c) potentially triggering an emergency stop by means of one of the emergency off-switches (8, 9) either as desired or for testing by means of a brake spring (46) and a brake shoe (45) on each caster (3) of the carriage (1), and releasing the brakes on each of the four casters (3) of the carriage (1) prior to onward travel, and
d) transporting the carriage (1) onward to the destination, and releasing the mechanical connection between the vehicle housing (38) and the carriage (1).

7. Method according to Claim 6, **characterized in that** the contact pressure of the lifting pins (28, 15, 20) depends on the payload of the carriage (1).

8. Method according to Claim 6 or 7, **characterized in that** the docking cross beam (5) has a docking cross brace (6) which allows alignment of a carriage (1) in two mutually perpendicular directions.

9. Method according to one of Claims 6 to 8, **characterized in that** the weight of the payload is determined by means of measuring the acceleration and/or the starting current of the laden transport vehicle (4).

10. Method according to one of Claims 6 to 9, **characterized in that** the calculation of the slippage on each drive wheel (7) is enabled by means of a laser scanner (2) in conjunction with a rotary encoder (33) on each drive wheel (7).

11. Computer program having a programming code for carrying out the method steps according to one of Claims 6 to 10, if the program is executed using a computer.

12. Machine-readable carrier having the programming code of a computer program for carrying out the method according to one of Claims 6 to 10, if the program is executed using a computer.

## Revendications

1. Système de transport pour le transport de charges composé d'un véhicule de transport sans conducteur en liaison avec une remorque de lancement pouvant être déplacée sur des rouleaux de guidage, avec les caractéristiques suivantes :
une carcasse de véhicule (40) avec un mandrin de levage central (15), un mandrin de levage gauche (28) et un mandrin de levage droit (20) pour recevoir et transporter une charge sur une remorque de lancement (1) pourvue de quatre rouleaux de guidage (3) au moyen d'une traverse d'attelage (5) intégrée dans la remorque de lancement (1) ;
avec deux roues motrices (7) entraînées des deux côtés au milieu de la carcasse de véhicule (40) au niveau respectivement d'un axe de rotation disposé à part, séparément respectivement d'un entraînement (16) ; et
des roues de soutien (19) respectivement prévues par paire au niveau du côté avant et au niveau du côté arrière de la carcasse de véhicule (40) ;
un capteur de mesure de rotation (33) étant prévu au niveau de chaque roue motrice (7) ; et
au moins un scanner laser (2) étant installé dans la zone extérieure de la carcasse de véhicule (40) ;
un système d'alimentation en énergie du véhicule de transport (4) étant prévu via des conduites inductives placées dans le plancher, à l'aide d'un récepteur de courant à induction (39) et un système d'arrêt d'urgence étant prévu, celui-ci comportant un interrupteur d'urgence (9) au niveau du véhicule de transport (4) et un interrupteur d'urgence (8) au niveau de la remorque de lancement (1), l'arrêt d'un patin de frein (45) chargé par pression étant déclenché simultanément au niveau de chaque rouleau de guidage (3) de la remorque de lancement (1) lors de l'actionnement d'un des interrupteurs d'urgence (8, 9) ;
**caractérisé en ce que** :
un ressort de pression (34) est relié au mandrin de levage central (15) au niveau d'une extrémité et à un arbre de levage (23) au niveau de l'autre extrémité ;
l'arbre de levage (23) comporte une plaque de pression (27) en contact avec le mandrin de levage gauche (28) et droit (20) ; et
un moteur d'entraînement entraîne l'arbre de levage (23) qui comprime le mandrin de levage central (15) dans une ouverture centrale de la traverse d'attelage (5) à l'aide du ressort de pression (34) et qui comprime le mandrin de levage gauche (28) et le mandrin de levage droit (20) dans des ouvertures supplémentaires correspondantes de la traverse d'attelage (5) à l'aide de la plaque de pression (27).

2. Système de transport selon la revendication 1, **caractérisé en ce que** la traverse d'attelage (5) de la remorque de lancement (1) comporte un croisillon d'attelage (6) permettant de loger la remorque de lancement (1) dans une position pivotée à angle droit du véhicule de transport (4).

3. Système de transport selon la revendication 1 ou 2, **caractérisé en ce que** le ressort de pression (34) entoure concentriquement un ressort de pression (32) intérieur supplémentaire dans la carcasse de véhicule (40), ledit ressort permettant d'appliquer une compression plus importante sur la remorque de lancement (1).

4. Système de transport selon l'une quelconque des revendications 1 à 3, **caractérisé en ce qu'**un freinage du véhicule de transport (4) est également possible au moyen d'un frein (37, 42) actionné à la main.

5. Système de transport selon l'une quelconque des revendications 1 à 4, **caractérisé en ce que** le calcul du patinage est rendu possible au niveau de chaque roue motrice (7) à l'aide du scanner laser (2) prévu dans le véhicule de transport (4) en liaison avec un capteur de mesure de rotation (33) placé au niveau de chaque roue motrice (7).

6. Procédé d'actionnement d'un système de transport pour le transport de charges composé d'un véhicule de transport sans conducteur en liaison avec une remorque de lancement pouvant être déplacée sur les rouleaux de guidage, avec les étapes de procédé suivantes :
a) utilisation d'une carcasse de véhicule (40) avec un mandrin de levage central (15), un mandrin de levage gauche (28) et un mandrin de levage droit (20) pour recevoir et transporter une remorque de lancement (1) au moyen d'une traverse d'attelage (5) intégrée dans la remorque de lancement (1), avec deux roues motrices (7) entraînées des deux côtés au milieu de la carcasse de véhicule (38) au niveau respectivement d'un axe de rotation disposé à part, séparément respectivement d'un entraînement (16) ; et
un ressort de pression (34) étant relié au mandrin de levage central (15) au niveau d'une extrémité et à un arbre de levage (23) au niveau de l'autre extrémité ; et
l'arbre de levage (23) comportant une plaque de pression (27) en contact avec le mandrin de levage gauche (28) et droit (20) ; et
b) amenée de la carcasse de véhicule (40) en dessous de la remorque de lancement (1), détermination des ouvertures dans la zone de la traverse d'attelage (5), entraînement de l'arbre de levage (23) par le biais d'un moteur d'entraînement, le mandrin de levage central (15) étant comprimé dans une ouverture centrale de la traverse d'attelage (5) à l'aide du ressort de pression (34) et le mandrin de levage gauche (28) et le mandrin de levage droit (20) étant comprimés dans des ouvertures supplémentaires correspondantes de la traverse d'attelage (5) à l'aide de la plaque de pression (27), au moins un scanner laser (2) servant à l'orientation ;
c) déclenchement potentiel d'un arrêt d'urgence à l'aide d'un des interrupteurs d'urgence (8, 9) soit de façon voulue soit à des fins de test à l'aide d'un ressort de frein (46) et d'un patin de frein (45) au niveau de chaque rouleau de guidage (3) de la remorque de lancement (1) et desserrage des freins au niveau de chacun des quatre rouleaux de guidage (3) de la remorque de lancement (1) avant de poursuivre la conduite ; et
d) poursuite du transport de la remorque de lancement (1) jusqu'au lieu cible et suppression de la liaison mécanique de la carcasse de véhicule (38) avec la remorque de lancement (1).

7. Procédé selon la revendication 6, **caractérisé en ce que** la compression des mandrins de levage (28, 15, 20) s'aligne sur la charge de la remorque de lancement (1) .

8. Procédé selon la revendication 6 ou 7, **caractérisé en ce que** la traverse d'attelage (5) comporte un croisillon d'attelage (6) permettant une orientation d'une remorque de lancement (1) dans deux directions s'étendant à angle droit l'une par rapport à l'autre.

9. Procédé selon l'une quelconque des revendications 6 à 8, **caractérisé en ce que** le poids de la charge est calculé à l'aide de la mesure de l'accélération et/ou du courant de démarrage du véhicule de transport (4) chargé.

10. Procédé selon l'une quelconque des revendications 6 à 9, **caractérisé en ce que** le calcul du patinage est rendu possible au niveau de chaque roue motrice (7) à l'aide d'un scanner laser (2) en liaison avec un capteur de mesure de rotation (33) prévu au niveau de chaque roue motrice (7).

11. Programme informatique avec un code de programmation servant à mettre en œuvre les étapes de procédé selon l'une quelconque des revendications 6 à 10 lorsque le programme est configuré dans un ordinateur.

12. Support lisible par machine avec le code de programmation d'un programme informatique servant à mettre en œuvre le procédé selon l'une quelconque des revendications 6 à 10 lorsque le programme est configuré dans un ordinateur.
